(19) Europäisches Patentamt
European Patent Office
Office européen des brevets

(11) Publication number: **0 260 120 A2**

# (12) EUROPEAN PATENT APPLICATION

(21) Application number: 87307960.2

(22) Date of filing: 09.09.87

(51) Int. Cl.⁴: **H 02 H 3/093**
H 02 H 3/033

(30) Priority: 10.09.86 US 905891

(43) Date of publication of application:
16.03.88 Bulletin 88/11

(84) Designated Contracting States:
AT BE CH DE FR GB IT LI NL SE

(71) Applicant: **S & C ELECTRIC COMPANY**
**6601 North Ridge Boulevard**
**Chicago Illinois 60626 (US)**

(72) Inventor: **Ruta, Joseph W.**
**1314 E. Crabtree Drive**
**Arlington Heights Illinois 60004 (US)**

(74) Representative: **Muir, Ian R. et al**
**HASELTINE LAKE & CO. Hazlitt House 28 Southampton Buildings Chancery Lane**
**London WC2A 1AT (GB)**

## (54) Control circuit with coordination provisions.

(57) A control circuit (15) for a circuti interrupter (400) or switching device provides a control signal (at 142) when predetermined parameters of the line current are satisfied; e.g., indicating or predicting the onset of a high overcurrent condition. In response to the control signal (at 178), the control circuit (15) is placed in a mode of operation to wait for subsequent conditions which , when fulfilled, determine that a trip signal (at 142) will be generated in appropriate coordination or synchronism with the overcurrent and/or other (e.g., at 185) interrupting or switching devices in the line. The selected time-current characteristic along with the various operating parameters of the control circuit are selected to provide the desired coordination with the operating characteristics of various other interrrupting or switching devices such as current-limiting fuses and the like. In a specific embodiment, the control circuit (15) includes an inverse-time current characteristic (via 120) and a fixed minimum time delay (at 184) in the high-current portion. In that specific embodiment, a first predetermined delay time interval (at 184) is defined upon the occurrence of a first control signal (at 178). a second predetermined enable time interval (at 188) is defined after the expiration of the first predetermined delay time interval (at 184). A trip signal (at 162,142) to operate the circuit interrupter (400) or switch is generated upon the occurrence of a second control signal (at 178 - see FIG.3) within the second predetermined enable time interval (at 188).

FIG-1

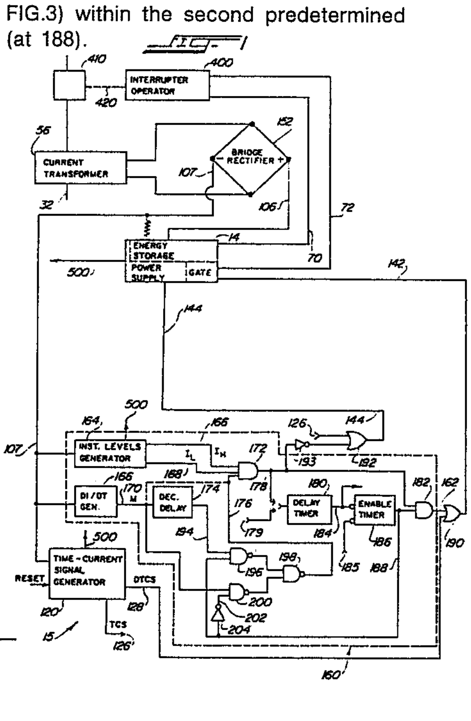


EP 0 260 120 A2

## Description

# CONTROL CIRCUIT WITH COORDINATION PROVISIONS

The present invention relates to an electrical control circuit for generating signals to operate a circuit interrupter or switching device in a line carrying alternating current and, more specifically, to a control circuit that generates a trip signal in response to overcurrent to provide coordination with downstream interrupting or switching devices such as load-side current-limiting fuses, to provide operation of the circuit interrupter or switching device with appropriate synchronization with the overcurrent, and to provide desirable transient immunity.

Various control circuits are known for controlling circuit interrupters upon the occurrence of overcurrent conditions; i.e., currents which are greater than the highest desirable operating current in an alternating current line. For example, the following patents and publications disclose various combinations of short-time, long-time, and instantaneous trip circuits;

Harner, et al., U.S. Patent No. 4,605,982;
Ruta, U.S. Patent No. 4,571,658;
Ruta, U.S. Patent No. 4,567,540;
Ruta, U.S. Patent No. No. 4,642,724;
Ruta, European Patent Publication EP-A-0225007;
Ruta, European Patent Publication EP-A-0225006;
Pang, et al., U.S. Patent No. 4,442,472;
Chen, et al., U.S. Patent No. 4,347,451;
Howell, U.S. Patent No. 4,297,741;
Shimp, U.S. Patent No. 4,258,403;
Boyd, U.S. Patent No. 3,831,061;
Vercellotti, U.S. Patent No. 4,017,766;
Graham, et al., U.S. Patent No. 3,290,556;
Zocholl, U.S. Patent No. 4,259,706;
N. Miyoshi et al, "Ultra-High Speed Protection Device - Fuji Ultrup Fuse", pages 47-51, Vol. 18, No. 1, Fuji Electric Review;
P.J. Kroon, "The Development and Application of a 69-kV Fault Current Limiter", pages 237-244, April 1, 1979, 7th IEEE/PES Transmission and Distribution Conference and Exposition;
J. Wafer, "The Impact of Solid-State Technology on Molded Case Circuit Breakers", pages 605-611, September 10, 1979, Vol. 1A-16, No. 5, September/October 1980, IEEE Transactions on Industry Applications.

While these arrangements may be generally suitable for their intended purposes, it is always desirable to provide additional features for improved coordination with other interrupting or switching devices in the line and improved immunity to transients.

According to the present invention, a control circuit is provided for a circuit interrupter or switching device that provides a control signal when predetermined parameters of the line circuit are satisfied; e.g., indicating or predicting the onset of a high overcurrent condition. The predetermined parameters may include the instantaneous magnitude of the current and the rate of change of the current. In response to the control signal, the control circuit is placed in a mode of operation to wait for subsequent conditions which, when fulfulled, determine that a trip signal will be generated in appropriate coordination or synchronism with the over-current and/or other interrupting or switching devices in the line. The selected time-current characteristic along with the various operating parameters of the control circuit are selected to provide the desired coordination with the operating characteristics of various other interrupting or switching devices, such as current-limiting fuses and the like.

In a specific embodiment, the control circuit includes an inverse-time current characteristic and a fixed minimum time delay in the high-current portion. In that specific embodiment, a first predetermined delay time interval is defined upon the occurrence of a first control signal. A second predetermined enable time interval is defined after the expiration of the first predetermined delay time interval. A trip signal to operate the interrupter or switch is generated upon the occurrence of a second control signal within the second predetermined enable time interval.

In a preferred arrangement, to optimize transient immunity, a decision delay is also included before the generation of the second control signal during the second predetermined enable time interval. The decision delay operates as a filter by requiring the continuous presence of the rate of change in the current being above a predetermined level thoughout a predetermined time interval before the second control signal is generated.

The control circuit in one arrangement includes a delay timer that is initiated by the first control signal; the delay timer providing the first predetermined delay time interval. The delay timer is connected to initiate operation of an enable timer after the expiration of the first predetermined delay time interval. The time duration of the enable timer is the second predetermined time interval. The output of the enable timer is logically combined with the second control signal so as to require the generation of the second control signal during the second predetermined enable time interval in order to output the trip signal. The presence of the second control signal during the enable time interval ensures operation of the circuit interrupter or switching device in synchronism with the over-current.

The invention, both as to its organization and method of operation together with other objects and advantages thereof, will best be understood by reference to the following specification taken in conjunction with the accompanying drawing in which like reference numerals refer to like elements and in which:

FIG. 1 is a block, logic and schematic diagram of the control circuit of the present invention for operating the illustrated interrupter operator and circuit interrupter;

FIG. 2 is a diagrammatic representation of a specific time-current characteristic which exemplifies operation of the control circuit of FIG. 1; and

FIG. 3 is a diagrammatic representation of various waveforms occurring in the control circuit of FIG. 1 that are useful to understand the present invention.

## DETAILED DESCRIPTION

Referring to FIG. 1, the present invention relates to a control circuit 15 that operates an interrupter operator 400 in response to overcurrent in a line 32 and in accordance with a predetermined time-current characteristic. The control circuit 15 is responsive to signals representing the current in the line 32. In a preferred arrangement, a current transformer 56 and a full-wave bridge rectifier 152 produce current signals on outputs 106 and 107 that are proportional to the current in the line 32. An exemplary time-current characteristic is illustrated in FIG. 2. However, while the exemplary time-current characteristics of FIG. 2 includes an inverse-time portion 300, it should be realized that the present invention may also be practiced so as to provide only the high-current charactersitic provided by the portion 302 with minimum fixed time delay at 303. Operation of the interrupter operator 400 causes the operation of a circuit interrupter 410 in the line 32, as illustrated by the dashed line 420. The interrupter operator 400 may be a power cartridge (gas generator), a solenoid, a relay, or an alarm. It should be understood that while an interrupter operator 400 and a current interrupter 410 are utilized for illustration, the invention may also be practiced with various switching and protective devices.

The control circuit 15 also includes a power supply 14 of the type described in U.S. Patent No. 4,567,540 and may include a time-current signal generator 120 such as that described in U.S. Patent No. 4,642,724. The power supply 14 includes an energy storage circuit connected to the outputs 106 and 107 for storing energy derived from the current signals thereon. As illustrated in the aforementioned U.S. Patent No. 4,567,540, the power supply 14 further contains a switch circuit and an associated control circuit which maintain the amount of energy stored in the energy storage circuit within a first range when there is no overcurrent in the line 32. The stored energy powers a regulated power supply, which supplies operating power to other portions of the control circuit 16 as generally shown at 500 in FIG. 1. Stored energy within the first range may be insufficient to reliably operate the interrupter operator 400 for currents below $I_2$ in FIG. 2. When required, energy within a second, higher range is stored for this purpose. Energy within the second range is stored in the energy storage circuit of the power supply 14 only on an "as needed" basis, i.e., only when operation of the circuit interrupter 410 by the energy storage circuit is required. This enables the power supply 14 to operate within a lower energy range during steady state (non-overcurrent) conditions, which lengthens component life and improves circuit accuracy.

As described more fully in U.S. Patent No. 4,642,724, the time-current signal generator 120 responds to current signals on line 107 which represent overcurrents in the line 32. When the time-current signal generator 120 receives a current signal at 107 representing overcurrent in the line 32, it applies a time-current signal (referred to as TCS signal hereinafter) at an output 126 after the passage of a time period inversely proportional to the difference between the overcurrent and the threshold current. The start of the time period is coincident with the onset of over-current in the line 32.

The power supply 14 controls the interrupter operator 400 over lines 70 and 72. A gate in the power supply 14 is operated by a trip signal on a line 142 such that the energy stored in the power supply 14 and the current in line 106 are applied to the interrputer operator 400. The power supply 14 is also responsive to signals on a stored energy control line 144 to increase the stored energy. As set forth in U.S. Patent Nos. 4,567,540, 4,642,724, and 4,571,658, for circuit interruption operation for overcurrents below $I_2$, a delayed time-current signal (referred to as DTCS signal hereinafter) at 128 is provided by the time-current signal generator 120; the signal at 128 being delayed from the signal at 126 for a time interval to allow the power supply 14 to increase the stored energy. The DTCS signal at 128 is provided such that the trip signal at 142 is delayed after the TCS signal at 126 and with respect to the stored energy control signal at 144 to allow sufficient time for the power supply 14 to suitably increase the stored energy. For example and referring now additionally to FIG. 2, the time-current signal generator 120, when provided, is arranged to provide the DTCS signal at 128 to the trip control line 142 when the current in the line 32 is above a current $I_1$ in accordance with the inverse time characteristic portion 300.

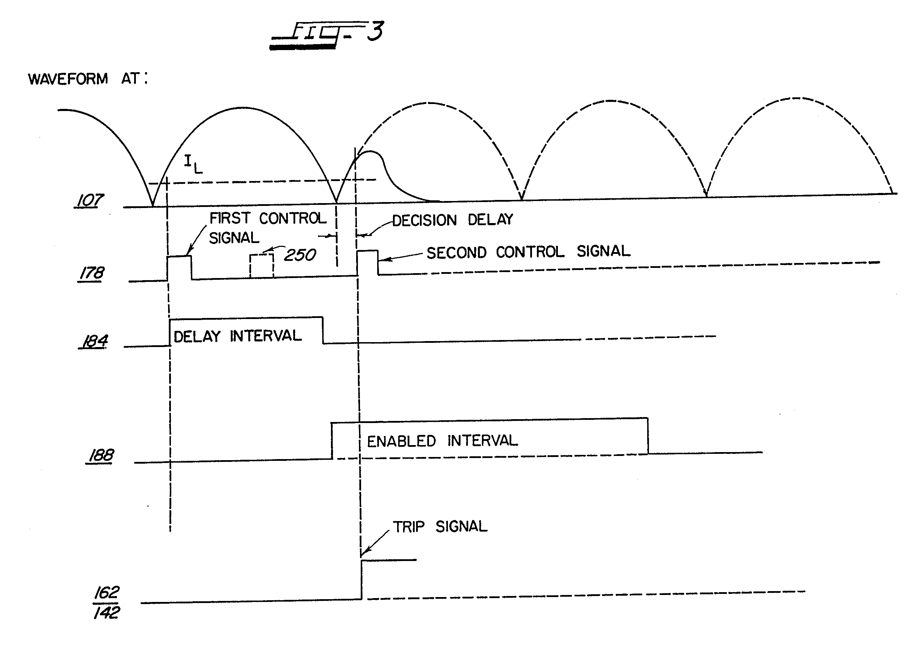

The control circuit 15 also includes a high-current trip signal generator 160 which also responds to current signals on the output 107. The high-current trip signal generator 160 may also be characterized as an "instantaneous" trip signal generator with the provision of a minimum fixed time delay resulting in the time-current characteristic depicted by portions 302,303 in FIG. 3. The high-current trip signal generator 160 generates at 162 a trip signal in accordance with predetermined coordination and synchronization parameters including predetermined characteristics of the current including instantaneous magnitude and rate of change which indicate the onset of high overcurrent in the line 32. The trip signal at 162 is provided on the trip control line 142.

Specifically, the high-current trip signal generator 160 generates a first control signal at 178 which conditions the high-current trip signal generator 160 into an operation mode to await predetermined coordination conditions which, when fulfilled, condition the high-current trip signal generator 160 into an enabled mode. In the enabled mode, a trip signal is generated at 162,142 in response to the occurrence of a second control signal at 178 that occurs subsequent to the first control signal at 178 that originally conditioned the high-current trip signal generator 160.

The generation of the control signal at 178 is synchronized to the line current 32 and can be utilized, for example, to predict or indicate the onset of a high overcurrent condition. Accordingly, the enabled mode permits the second control signal at 178 to initiate tripping while the instantaneous current is relatively low (near current zero). This synchronized operation is, of course, desirable since the circuit interrupter 410 may be operated to interrupt overcurrents at lower instantaneous currents. The first and second control signals at 178 may be the same or different signals in various embodiments of the present invention. In a preferred embodiment, the first control signal at 178 is generated without the decision delay of stage 174 while the second control signal at 178 is generated with the decision delay of stage 174 as will be explained in more detail hereinafter. It should also be understood that the invention can be practiced with two different control signals; e.g., a first control signal at 179 and a second control signal at 178. In specific embodiments, the coordination condition, e.g., at signal inputs 184 or 185, may include line current, synchronization signals, appropriate time delay intervals, etc.

Considering the specific arrangement illustrated in FIG. 1 and additionally referring to FIG. 3, the high-current trip signal generator 160 includes an instantaneous levels generator 164 and a rate of change (di/dt) generator 166. The rate of change generator 166 may also by characterized as a rate of change detector. The instantaneous levels generator 164 is responsive to current signals on 107 (shown inverted in FIG. 3) to provide at outputs 168 and 166 signals representing, respectively, whether or not the magnitude of the instantaneous current is greater than a first value $I_L$ and less than a second value $I_H$. The rate of change generator 166 provides a signal at output 170 when the rate of change in the current is greater than a predetermined rate. The current-level signals 166 and 168 are connected to respective inputs of a three-input AND gate 172. The rate of change signal 170 is connected (either directly or indirectly through a decision delay stage 174 and associated gate circuit to a third input 176 of the three-input AND gate 172. The decision delay stage 174 provides transient immunity as set forth in U.S. Patent No. 4,605,982. The control signal at the output 178 (FIG. 3) of the AND gate 172 is connected to the input of a delay timer 180 and also to one input of a two-input AND gate 182. The $I_H$ signal at 166 is high when the instantaneous current in line 32 is below the level $I_H$. The $I_L$signal at 168 is high when the instantaneous current in line 32 is above the level $I_L$. Additionally, the rate of change signal at 170 is high when the rate of change of current in line 32 exceeds the predetermined rate; for example M.

The delay timer 180, when activated by a rising edge signal at 178, provides at output 184 (FIG. 3) a high level signal throughout a predetermined delay time interval which may also be characterized as a disable time interval. The signal at 184 is connected to the inverting input of an enable timer 186. The enable timer 186 when activated is arranged to provide a high level signal at an output 188 (FIG. 3) for a predetermined enable time interval in response to the falling edge of the signal at the input 184. The output 188 of the enable timer is connected to the second input of the AND gate 182. The output of the AND gate 182 provides the trip control signal 162 at one input of a two-input OR gate 190. The second input of the OR gate 190 is connected to the DTCS signal at 128 from the time current signal generator 120. The output of the OR gate 190 is connected to the trip control signal line 142. The control signal at 178 is also connected to one input of a two-input OR gate 192 through an inverter 193. The second input to the OR gate 192 is connected to the TCS signal 126 of the time current signal generator 120. The output of the OR gate 192 is connected to the stored energy control line 144 to the power supply 14.

When the high-current trip signal generator 160 provides a control signal at 178 indicating the onset of high overcurrent, the power supply 14 via signal 144 and OR gate 192 is controlled to increase the stored energy within the power supply 14. Additionally, the control signal at 178 starts the delay timer 180. After the delay timer 180 times out a first predetermined delay time interval, the enable timer 186 via the signal at 184 is enabled to provide a high output signal at 188 for a second predetermined enable time interval. If a control signal is generated at 178 during the enable time interval of the signal at 188, the output 162 of the AND gate 182 provides a high signal through the OR gate 190 and a trip control signal at 142 to the power supply 14 to operate the interrupter operator 400.

Accordingly, as best seen in FIG. 3, if a control signal is generated at 178 within the enable time interval after the expiration of the first delay time interval, a trip control signal will be generated at 142; the delay time interval of the time 180 being started upon the prior occurrence of a control signal at 178. In one embodiment not intended in any limiting sense, the delay time interval is approximately 6-8 milliseconds and the enable time interval is approximately 10-15 milliseconds for 60 hz alternating current. However, if a control signal at 178 is generated during the delay time interval as shown in phantom in FIG. 3 at 250, no trip signal will be generated at 142.

Considering now the arrangement as shown in FIG. 1 utilizing the decision delay stage 174, a decision delay time on the rate of change signal at 170 is provided when the enable timer 186 is timing the enable interval. The decision delay stage 174 provides a high output at 194 when the rate of change signal at 170 is above a predetermined rate for the predetermined decision delay time of the stage 174. The output 194 is connected to one input of a two-input NAND gate 196. The output of the NAND gate 196 is connected to one input of a two-input NAND gate 198. The rate of change signal at 170 is also connected to one input of a two-input NAND gate 200. The second input of the NAND gate 196 is connected to the output 188 of the enable timer 186. The second input of the NAND gate 200 at 202 is connected to the output of an inverter 204. The input of the inverter 204 is connected to the output of 188 of the enable timer 186. The output of the two-input NAND gate 198 is connected to the input 176 to the gate 172. Considering operation, if the enable timer 186 is not operative; i.e., no control signal at 178 has been previously generated so as to cause the delay timer 180 to initiate a delay time interval, the signal at 188 is low. Upon the generation of the rate of change signal at 170, the gate 200 provides a low level signal to the gate 198. The gate 198 outputs a high signal at 176 at the input to the gate 172 to allow the generation of the control signal at 178 provided the $I_H$ and $I_L$ signals at 166 and 168 respectively are both high. Thus, the decision delay of the stage 174 is not utilized for generation of a first-occurring control signal when the enable timer 186 is not enabled. If the enable timer 186 is enabled, such as occurs after a first control signal and after the delay timer 180 times out and during the enable time period, the output at 188 is high and thus the gate 200 blocks the rate of change signal at 170. However, if the rate of change signal at 170 is maintained throughout the decision delay time of stage 174, the high output at 194 is passed through the gates 196 and through 198 to produce a high signal at 176. As a result, the decision delay is utilized in the generation of the second control signal at 178.

While the specific arrangement of FIG. 1 illustrates operation of the invention with the provision of a delay time interval at 184, it should be understood that, in other specific embodiments, various other coordination or synchronization signals can be utilized such as at 185 to initiate the enable time interval at 188 including current levels, operation indicators from other interrupting devices, etc. Accordingly, whatever the source of the coordinating signals at 184 and 185, the effect is to provide coordination of the interrupter operator 400 with other devices and also maintaining appropriate synchronized operation of the circuit interrupter 410 with the current in the line 32. Further, the time signal at 184 can be connected at a reset input of the time current generator 120 to reset operation thereof. It should also be realized that the control circuit 15 of the present invention provides desirable immunity to transients whether or not the time delay interval of the delay timer 180 is selected or utilized for coordination purposes with other devices.

## Claims

1. A control circuit (15) responsive to the current in an alternating current line (32) comprising:
means (e.g., 164,166,172) responsive to the current in the line for generating a control signal (at 178) once during each one-half cycle of the current whenever predetermined parameters of the current are satisfied; the control circuit BEING CHARACTERIZED BY:
means (180) responsive to a first occurrence of said control signal for defining a first predetermined time interval;
means (186) responsive to the expiration of said first predetermined time interval for providing an enable signal (at 188) for a second predetermined time interval; and
means (182) responsive to said enable signal and a subsequent occurrence of said control signal for providing the trip signal (at 162,142).

2. The control circuit of claim 1 wherein said control-signal-generating means (e.g., 164,166,172) comprises means (164,166) responsive to the current for generating said control signal whenever the rate of change of the current and the magnitude of the current indicates the onset of overcurrent conditions.

3. The control circuit of claim 2 further comprising time-current signal generator means (120) responsive to the current for generating a trip signal (128,142) in response to overcurrent in the line after the passage of a time delay that is inversely related to the overcurrent in the line.

4. The control circuit of claim 2 wherein said control-signal-generating means further comprises decision means (174,204,196,199,200) operative during said second predetermined time interval for generating said control signal only when the rate of change of the current continuously exceeds a predetermined rate (M) throughout a third predetermined time interval.

5. The control cricuit of claim 4 wherein said decision means (174,204,196,198,200) further comprises current level detector means (164) for generating said control signal only when the instantaneous magnitude of the line current at the expiration of said third predetermined time interval is above a first level ($I_L$)and does not exceed a second level ($I_H$) higher than said first level.

6. The control circuit of claim, 1 wherein said control signal is generated before the line current exceeds a predetermined instantaneous level ($I_H$).

7. The control circuit of claim 1 wherein said control signal is generated at the onset of high overcurrent condition to permit generation of said trip signal at instantaneous current levels (e.g., $I_L$ - $I_H$) that are substantially less than the peak overcurrent (see FIG. 3) that would be expected based on the onset of the high overcurrent condition.

8. The control circuit of claim 1 wherein said first predetermined interval (see 184 of FIG. 3) is at least a substantial portion of one-half cycle of the line current (see 107 of FIG. 3).

9. The control circuit of claim 1 wherein said second predetermined interval (see 188 of FIG. 3) is greater than one-half cycle of the line current (see 107 of FIG. 3).

10. A control circuit (15) responsive to the current in an alternating current line (32) and a coordination signal (e.g., 185), the control circuit comprising:
means (e.g., 164,166,172) responsive to the current in the line for generating a control signal (at 178) whenever predetermined current parameters are satisfied; the control circuit BEING CHARACTERIZED BY:

means (186) responsive to a first occurrence (see 178 of FIG. 3) of said control signal (at 178) and a coordination signal (185) for generating an enable signal (at 188) for a predetermined time interval (see 188 of FIG. 3); and

means (182) responsive to said enable signal (at 188) and a subsequent occurrence (see 178 of FIG. 3) of said control signal for generating a trip signal (at 162,142).

0260120

FIG-1

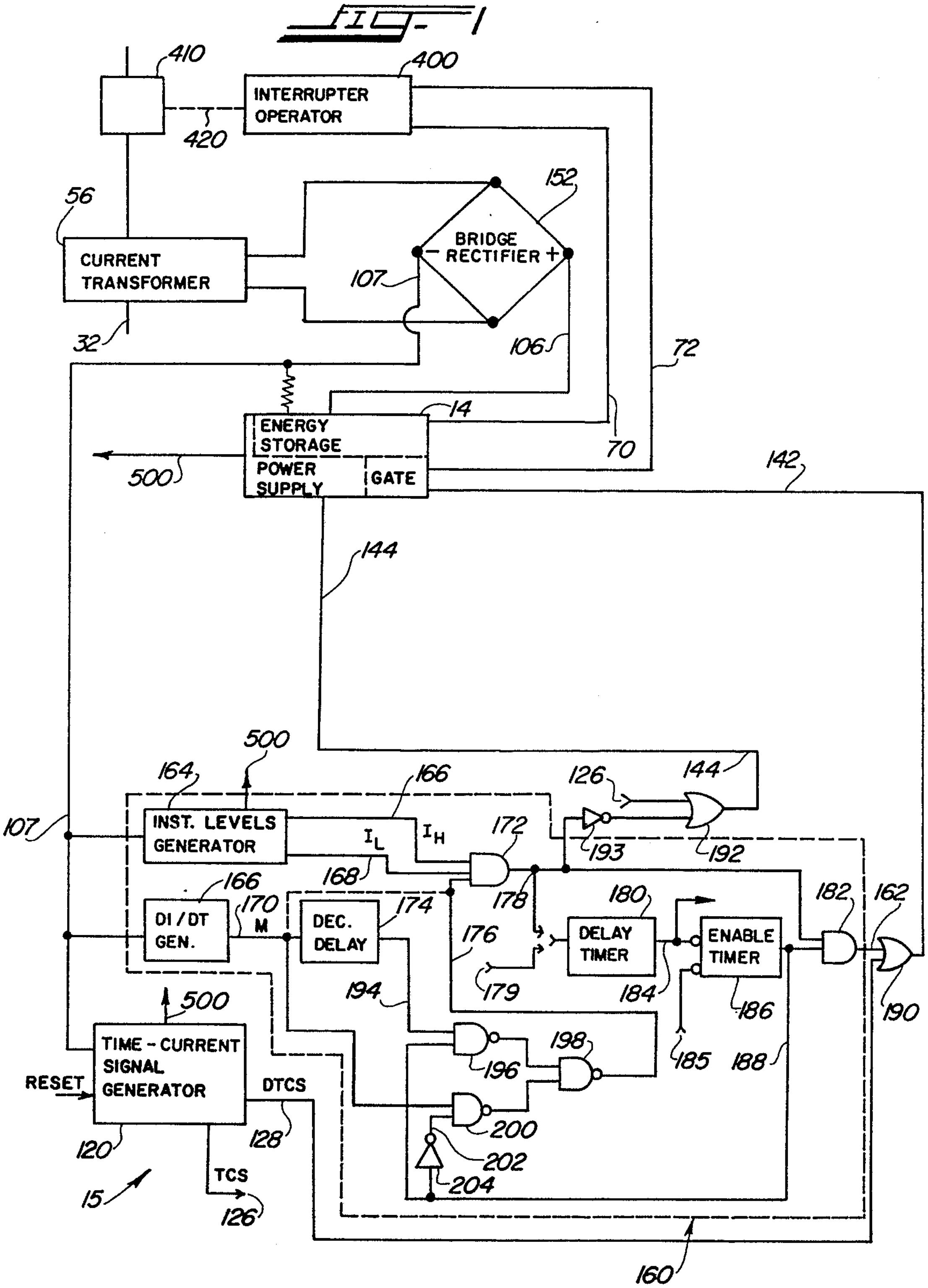

0260120

FIG. 2

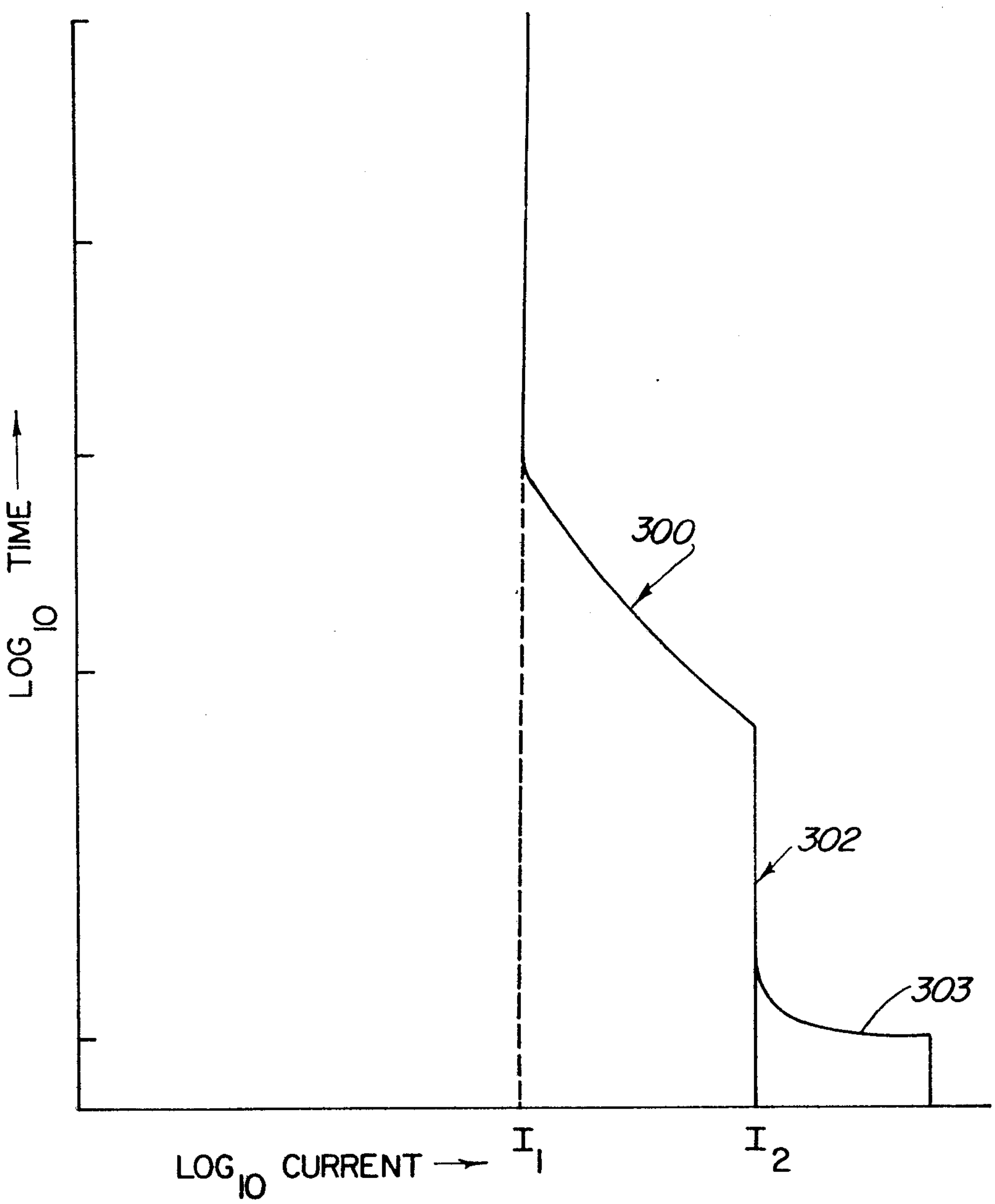

0260120

FIG. 3